# EUROPÄISCHE PATENTSCHRIFT

(11) **EP 3 263 211 B1**
(45) Veröffentlichungstag und Bekanntmachung des Hinweises auf die Patenterteilung: **21.09.2022**
(21) Anmeldenummer: 16176411.3
(22) Anmeldetag: 27.06.2016
(51) Int. Cl.: B01J 19/30

(54) **PLATTENFOERMIGEKATALYSATORFÜLLUNG**
CATALYST FILLING IN FORM OF PLATES
REMPLISSAGE DE CATALYSEUR EN FORME DE PLAQUES

(43) Veröffentlichungstag der Anmeldung: 03.01.2018
(73) Patentinhaber: Alantum Europe GmbH, 81541 München (DE)
(72) Erfinder: Gocke, Ulla, 85649 Brunnthal (DE); Kolvenbach, Robin, 80639 München (DE); Scheiblhuber, Anke, 80809 München (DE); Torkuhl, Lars, 80809 München (DE)
(74) Vertreter: Manitz Finsterwald Patent- und Rechtsanwaltspartnerschaft mbB

(56) Entgegenhaltungen:
- EP-A2- 0 930 096
- WO-A1-2007/083077
- DE-C- 343 400

## Beschreibung

Die vorliegende Erfindung betrifft eine Katalysatorfüllung, welche mehrere Lagen eines plattenförmigen Katalysatormaterials umfasst.

Eine derartige Katalysatorfüllung ist grundsätzlich bekannt und üblicherweise in einem Reaktor untergebracht, in welchem die Katalysatorfüllung in einer Richtung quer und insbesondere rechtwinklig zu den Lagen des Katalysatormaterials von einem katalytisch umzuwandelnden Stoff durchströmt wird. Dabei ist eine kontrollierte Verteilung der Verweildauer bei vielen heterogenen katalytischen Umwandlungen entscheidend für die Steuerung der Aktivität und Selektivität des Katalysationsprozesses. Dies ist insbesondere in Reaktoren mit besonders großen Abmessungen und bei Reaktionen mit besonders kurzen Verweildauern der Reaktanden in der Katalysatorfüllung von Bedeutung, entsprechend bei jeglicher kinetischer kontrollierter Reaktion, beispielsweise bei der Umwandlung von Methanol in Formaldehyd, bei dem Ostwald-Verfahren oder bei dem Andrussow-Verfahren. Außerdem kann eine gleichmäßige Reaktantenflusscharakteristik insbesondere bei der Hydrierung von gasförmigen oder flüssigen Reaktanten vorteilhaft sein.

Allgemein ist für alle heterogenen katalytischen Reaktionen eine Reduzierung von Leerräumen im Reaktor und dadurch letztlich eine Erhöhung der Menge von aktivem Material in dem Reaktor von Vorteil, da dies dazu beiträgt, die Effizienz des Gesamtprozesses pro Volumeneinheit des verwendeten Reaktors und somit auch den möglichen Produktausstoß pro Zeit bei gegebenen Reaktorvolumen zu erhöhen. Dies ist bespielsweise bei der heterogen katalysierten Umwandlung von Erdgas (vornehmlich Methan) in längerkettige Kohlenwasserstoffe (Gas-to-Liquid) besonders vorteilhaft.

Weiterhin hat die Reaktorfüllung einen entscheidenden Einfluss auf die Temperaturkontrolle während einer heterogenkatalysierten Umsetzung. Insbesondere die Wärmezu- und abfuhr kann durch eine Verringerung der Leerräume innerhalb einer Katalysatorschüttung deutlich verbessert werden. Dies führt insbesondere bei stark exothermen Reaktionen zu einer Verminderung von Hot Spots und einer erhöhten Prozessstabilität.

In kleineren Reaktoren lassen sich die einzelnen Lagen zu diesem Zweck mittels durchgängiger Platten aus Katalysatormaterial realisieren, d.h. jede Platte füllt die Innenquerschnittsfläche des Reaktors voll aus. Außerdem eignen sich hier monlithische Reaktorfüllungen. Als problematischer erweist sich die Ausfüllung eines Reaktors mit Katalysatormaterial jedoch dann, wenn die Abmessungen des Reaktors deutlich größer sind als die Abmessungen einzelner Platten von Katalysatormaterial, so dass eine Lage von Katalysatormaterial aus mehreren Platten zusammengesetzt werden muss, weil hier die Gefahr besteht, dass durch Stoßkanten zwischen benachbarten Platten Strömungskanäle gebildet werden, die sich in Strömungsrichtung gesehen durch zumindest einen Großteil der Katalysatorfüllung erstrecken und die Verweilzeit des umzuwandelnden Stoffes räumlich partiell erheblich verringern und somit letztlich die Katalysatoreffizienz erheblich herabsetzen.

In der WO 2007/083077 A1 ist eine Katalysatorfüllung gemäß dem Oberbegriff von Anspruch 1 offenbart.

Der Erfindung liegt die Aufgabe zugrunde, eine Katalysatorfüllung zu schaffen, welche auch in größeren Reaktoren für eine optimale Katalysatoreffizienz sorgt. Zur Lösung der Aufgabe ist eine Katalysatorfüllung mit den Merkmalen des Anspruchs 1 vorgesehen.

Die erfindungsgemäße Katalysatorfüllung umfasst eine erste Lage eines plattenförmigen Katalysatormaterials und eine darüber liegende zweite Lage eines plattenförmigen Katalysatormaterials, wobei das Katalysatormaterial der ersten Lage wenigstens zwei Platten umfasst, die jeweils unter Bildung einer Stoßkante aneinander stoßen, wobei das Katalysatormaterial der zweiten Lage wenigstens zwei Platten umfasst, die jeweils unter Bildung einer Stoßkante aneinander stoßen, und wobei die Platten der zweiten Lage relativ zu den Platten der ersten Lage derart ausgebildet und/oder angeordnet sind, dass bei einer Projektion der Stoßkante(n) der ersten Lage und der Stoßkante(n) der zweiten Lage in eine gemeinsame Ebene keine Stoßkante der ersten Lage mehr als einen gemeinsamen Punkt mit einer Stoßkante der zweiten Lage aufweist. Beispielsweise können die Platten der ersten Lage und die Platten der zweiten Lage unterschiedliche Formate aufweisen und/oder sie können zueinander versetzt und/oder verdreht angeordnet sein, insbesondere derart verdreht, dass die Stoßkanten benachbarter Lagen keine rechten Winkel einschließen.

Der Erfindung liegt mit anderen Worten der allgemeine Gedanke zugrunde, durch eine gezielte Ausbildung und/oder Anordnung der Platten in benachbarten Lagen dafür zu sorgen, dass die Stoßkanten benachbarter Lagen beabstandet zueinander verlaufen oder sich allenfalls schneiden, aber keinesfalls kongruent übereinander liegen, d.h. sich decken. Auf diese Weise wird verhindert, dass sich durch die Stoßkanten hindurch Strömungskanäle ausbilden, welche dazu führen würden, dass der durch das Katalysatormaterial umzuwandelnde Stoff an den Platten vorbei anstatt durch diese hindurch strömt. Im Ergebnis werden erfindungsgemäß also kritische Strömungskanäle vermieden und eine optimale und einstellbare Verweildauer des umzuwandelnden Stoffes in der Katalysatorfüllung und somit eine optimale Ausnutzung des Katalysatormaterials und folglich eine maximierte Katalysatoreffizienz sichergestellt.

Die erfindungsgemäße Katalysatorfüllung kann beispielsweise bei einer heterogenkatalysierten Reaktion zur Anwendung kommen. Dabei können die Reaktanten und Produkte der heterogenkatalysierten Reaktion in gasförmiger und/oder flüssiger Form vorliegen. Des Weiteren kann die erfindungsgemäße Katalysatorfüllung bei der Umsetzung von Erdgas in längerkettige Kohlenwasserstoffe, bei der Hydrierung/Dehydrierung von Kohlenwasserstoffen, bei Oxidationsreaktionen, insbesondere bei partiellen Oxidationsreaktionen, bei der Umsetzung von Methanol zu Formaldehyd, bei dem Ostwald-Verfahren oder bei dem Andrussow-Verfahren Verwendung finden.

Vorteilhafte Ausbildungen der Erfindung sind den Unteransprüchen, der Beschreibung und der Zeichnung zu entnehmen.

Das Katalysatormaterial weist einen Metallschaum auf.

Gemäß einer Ausführungsform ist eine dritte Lage eines plattenförmigen Katalysatormaterials über der zweiten Lage des plattenförmigen Katalysatormaterials angeordnet, wobei das Katalysatormaterial der dritten Lage wenigstens zwei Platten umfasst, die jeweils unter Bildung einer Stoßkante aneinander stoßen, und wobei die Platten der dritten Lage relativ zu den Platten der zweiten Lage derart ausgebildet und/oder angeordnet sind, insbesondere versetzt und/oder verdreht angeordnet sind, dass bei einer Projektion der Stoßkante(n) der zweiten Lage und der Stoßkante(n) der dritten Lage in eine gemeinsame Ebene keine Stoßkante der zweiten Lage mehr als einen gemeinsamen Punkt mit einer Stoßkante der dritten Lage aufweist.

Dabei kann die Stoßkante bzw. können die Stoßkanten der dritten Lage mit der Stoßkante bzw. den Stoßkanten der ersten Lage deckungsgleich ausgerichtet sein. Beispielsweise ist es denkbar, dass gerade Lagen und ungerade Lagen jeweils gleich ausgebildet sind, so dass eine abwechselnde Schichtung zweier Typen von Lagen vorliegt, mit anderen Worten also ein Lagensystem A-B-A-B....

Alternativ kann die Stoßkante bzw. können die Stoßkanten der dritten Lage auch mit der Stoßkante bzw. den Stoßkanten der ersten Lage nicht deckungsgleich ausgerichtet sein, so dass bei einer Projektion der Stoßkante(n) der ersten Lage und der Stoßkante(n) der dritten Lage in eine gemeinsame Ebene keine Stoßkante der ersten Lage mehr als einen gemeinsamen Punkt mit einer Stoßkante der dritten Lage aufweist. Beispielsweise kann auch die dritte Lage anders dimensionerte Platten aufweisen als die erste Lage und/oder ein Versatz und/oder eine Verdrehung der dritten Lage sowohl relativ zu der zweiten als auch zu der ersten Lage vorliegen, was in einem Lagensystem A-B-C resultiert.

Ein solches dreilagiges Lagensystem A-B-C kann sich in der Katalysatorfüllung entweder wiederholen, beispielsweise zu einem Gesamtsystem A-B-C-A-B-C..., A-B-C-B-A-B-C..., oder auch fortsetzen, beispielsweise zu einem Gesamtsystem A-B-C-D-E.... Im letzteren Fall läge also eine Vielzahl von übereinander liegenden Lagen eines plattenförmigen Katalysatormaterials vor, die jeweils wenigstens zwei unter Bildung einer Stoßkante aneinander stoßende Platten umfassen, wobei die Platten aller Lagen derart verschieden ausgebildet und/oder versetzt und/oder verdreht zueinander angeordnet sind, dass bei einer Projektion der Stoßkanten aller Lagen in eine gemeinsame Ebene keine zwei Stoßkanten unterschiedlicher Lagen mehr als einen gemeinsamen Punkt aufweisen.

Aus Gründen einer einfacheren und kostengünstigeren Herstellbarkeit weisen die Platten jeweils einer Lage zumindest annähernd gleiche Abmessungen auf. Entsprechend können auch die Platten der ersten und zweiten Lage und insbesondere jeder weiteren darüber liegenden Lage zumindest annähernd gleiche Abmessungen aufweisen. Bevorzugt besitzen alle Platten im Wesentlichen gleiche Abmessungen. Die Stärke der Platten kann beispielsweise im Bereich von 1 mm bis 200 mm liegen.

Gemäß einer Ausführungsform sind die Platten der ersten und zweiten Lage und insbesondere jeder weiteren darüber liegenden Lage rechteckig ausgebildet. Die Verwendung von rechteckigen Platten eignet sich insbesondere für eine Katalysatorfüllung die für einen Reaktor mit planem Boden vorgesehen ist.

Beispielsweise können die Platten jeweils eine Breite im Bereich von 20 mm bis 3000 mm, bevorzugt im Bereich von 400 mm bis 1100 mm, und eine Länge im Bereich von 200 mm bis 3500 mm, bevorzugt im Bereich von 800 mm bis 1000 mm, besitzen. Die Stärke der Platten kann im Bereich von 1 mm bis 200 mm liegen.

Es versteht sich, dass die Gestalt der Platten grundsätzlich nicht auf rechteckige Formen beschränkt ist. Vielmehr kommen auch andere Formen in Frage, wie beispielsweise beliebige Polygone, aber auch teilweise oder vollständig runde Formen.

Die Katalysatorfüllung lässt sich auf besonders wirtschaftliche Weise fertigen, wenn mehrere Platten einer Lage zu einem Plattenband verbunden sind und zwei aneinander stoßende Plattenbänder eine Stoßkante definieren. Dabei können sich benachbarte Platten einer Lage eines Plattenbandes jeweils überlappen. Eine besonders einfache Verbindung zweier Platten eines Plattenbandes lässt sich in diesem Fall erreichen, wenn die Platten zumindest in ihrem Überlappungsbereich gewalzt werden. Alternativ oder zusätzlich ist es auch denkbar, zwei benachbarte Platten nach einem Feder/Nut-Prinzip oder einem Feder/Feder-Prinzip miteinander zu verbinden. Außerdem ist es vorstellbar, benachbarte Platten miteinander zu vernähen, zu verschweißen, zu verpressen, aneinander zu tackern oder auf eine andere Weise miteinander zu verbinden.

Soll die Katalysatorfüllung in einem Reaktor mit Glockenboden angeordnet werden, ist es vorteilhaft, wenn die Platten der ersten und zweiten Lage und insbesondere jeder weiteren darüber liegenden Lage trapezähnlich oder kreissektorähnlich ausgebildet sind. Grundsätzlich eignen sich derart geformte Platten aber auch für die Katalysatorfüllung eines Reaktors mit planem Boden, insbesondere wenn der Reaktor eine kreisförmige Innenkontur aufweist.

Vorteilhaftweise sind die Platten der ersten und zweiten Lage und insbesondere jeder weiteren darüber liegenden Lage jeweils unter Bildung eines Plattenkreisringes angeordnet. Es versteht sich, dass die ringförmig angeordneten Platten aufeinander folgender Lagen einen Winkelversatz zueinander aufweisen, um zu verhindern, dass die Stoßkanten zwischen benachbarten Platten einer Lage mit denen der darüber liegenden Lage deckungsgleich ausgerichtet sind. Die Plattenkreisringe aufeinander folgenden Lagen sind gewissermaßen also um ihren Mittelpunkt zueinander verdreht.

Vorteilhafterweise definiert jeder Plattenkreisring einen Innenkreis. Die ringförmig angeordneten Platten laufen also nicht im Zentrum zusammen. Stattdessen wird ein Zentralbereich geschaffen, welcher separat ausgefüllt werden kann, z.B. durch wenigstens eine an den Plattenkreisring anstoßende oder mit diesem überlappende Zentralplatte, wodurch die Bildung eines zentralen Strömungskanals vermieden wird. Um zu verhindern, dass Stoßkanten zwischen der wenigstens einen Zentralplatte und den ringförmig angeordneten Platten jeweils aufeinander folgender Lagen kongruent miteinander ausgerichtet sind, ist es vorteilhaft, wenn sich die Innendurchmesser der Plattenkreisringe bzw. die Durchmesser der wenigstens einen Zentralplatte aufeinander folgender Lagen unterscheiden.

Alternativ ist es aber auch möglich, die Innendurchmesser der Plattenkreisringe aller Lagen zumindest annähernd gleich auszubilden. In diesem Fall kann der durch die Plattenkreisringe definierte Zentralbereich durch ein Abschlussstück, insbesondere durch ein die Platten zusammenhaltendes Abschlussstück, verschlossen werden, um die Ausbildung eines zentralen Strömungskanals zu verhindern.

Das Abschlussstück braucht dabei nicht aus Katalysatormaterial gebildet zu sein. Beispielsweise kann es sich bei dem Abschlussstück um einen Positionsgeber handeln, welcher die korrekte Position der ringförmig angeordneten Platten vorgibt, und/oder um einen Positionshalter, welcher die Platten in ihrer korrekten Position hält, z.B. zusammenklemmt.

Grundsätzlich kann ein solcher Positionsgeber und/oder Positionshalter auch an einer anderen Stelle vorgesehen sein, beispielsweise an einer Wand des Reaktors, in welchen die Katalysatorfüllung eingebracht ist. Insbesondere kann ein solcher Positionsgeber und/oder Positionshalter auch zur Relativausrichtung von Lagen verwendet werden, die aus rechteckigen Platten aufgebaut sind.

Unabhängig davon, welche Form die Platten letztlich aufweisen, insbesondere unabhängig davon, ob sie rechteckig, trapezähnlich, in Form eines anderen Polygons, rund oder kreissektorähnlich ausgebildet sind, lässt sich die Herstellung der Katalysatorfüllung dadurch weiter vereinfachen, dass jeweils eine Vielzahl von übereinander liegenden Platten zu einem in zumindest einer Richtung schräg verschobenen Plattenstapel verbunden sind, d.h. jede nachfolgende Platte ist in derselben Richtung um einen gewissen Betrag relativ zu der vorherigen Platte versetzt angeordnet, wobei der Betrag des Versatzes in einer Richtung für alle Platten eines Stapels identisch sein kann. Die Platten eines Plattenstapels können alle gleichartig ausgebildet sein, beispielsweise rechteckig. Insbesondere können alle Platten eines Plattenstapels gleiche Abmessungen aufweisen. Alternativ können die Platten in Stapelrichtung gesehen aber auch kleiner werden, beispielsweise abnehmende Breiten und/oder Längen aufweisen. Die Platten eines Plattenstapels können miteinander vernäht, verschweißt, verpresst, aneinander getackert oder auf eine andere Weise miteinander verbunden sein.

Zur Bildung der Katalysatorfüllung brauchen mehrere Plattenstapel lediglich derart nebeneinander angeordnet werden, dass sich die Schrägseiten benachbarter Stapel überdecken. Benachbarte Plattenstapel können dann ihrerseits miteinander vernäht, verschweißt, verpresst, aneinander getackert oder auf eine andere Weise miteinander verbunden sein.

Weiterer Gegenstand der Erfindung ist ein Reaktor mit einer Katalysatorfüllung der voranstehend beschriebenen Art.

Nachfolgend wird die Erfindung rein beispielhaft anhand von möglichen Ausführungsformen unter Bezugnahme auf die beigefügte Zeichnung beschrieben. Es zeigen:
- Fig. 1: eine erste Variante einer Lage einer Katalysatorfüllung;
- Fig. 2: eine erste Anordnung zweier Lagen der ersten Variante;
- Fig. 3: eine zweite Anordnung zweier Lagen der ersten Variante;
- Fig. 4: eine zweite Variante einer Lage einer Katalysatorfüllung;
- Fig. 5: eine Anordnung einer Lage der ersten Variante und einer Lage der zweiten Variante;
- Fig. 6: eine erste Anordnung dreier Lagen einer Katalysatorfüllung;
- Fig. 7: eine zweite Anordnung dreier Lagen einer Katalysatorfüllung;
- Fig. 8: eine dritte Variante einer Lage einer Katalysatorfüllung;
- Fig. 9: eine Anordnung dreier Lagen der dritten Variante;
- Fig. 10A: eine erste Ausführungsform eines aus dreizehn Platten auf-gebauten Formteils;
- Fig. 10B: eine Katalysatorfüllung, die aus mehreren Formteilen der Ausführungsform von Fig. 10A zusammengesetzt ist;
- Fig. 10C: Draufsichten auf die einzelnen Lagen der Katalysatorfüllung von Fig. 10B;
- Fig. 11A: eine zweite Ausführungsform eines aus dreizehn Platten aufgebauten Formteils;
- Fig. 11B: eine Katalysatorfüllung, die aus mehreren Formteilen der Ausführungsform von Fig. 11A zusammengesetzt ist;
- Fig. 11C: Draufsichten auf die einzelnen Lagen der Katalysatorfüllung von Fig. 11B;
- Fig. 12: eine erste Ausführungsform eines Formteilbandes mit dreizehn Lagen;
- Fig. 13: eine zweite Ausführungsform eines Formteilbandes mit dreizehn Lagen;
- Fig. 14: eine dritte Ausführungsform eines Formteilbandes mit dreizehn Lagen;
- Fig. 15: eine vierte Ausführungsform eines Formteilbandes mit dreizehn Lagen;
- Fig. 16: Draufsichten auf die einzelnen Lagen einer Katalysatorfüllung, die aus mehreren Formteilbändern der Ausführungsform von Fig. 15 zusammengesetzt ist;
- Fig. 17A: eine perspektivische Ansicht einer Katalysatorfüllung, die aus mehreren Lagen einer vierten Variante gebildet ist;
- Fig. 17B: eine Draufsicht auf die Katalysatorfüllung von Fig. 17A;
- Fig. 17C: einen Positionshalter der Katalysatorfüllung von Fig. 17A;
- Fig. 18: zwei Lagen gemäß einer fünften Variante;
- Fig. 19A: eine Draufsicht auf zwei Lagen gemäß einer sechsten Variante; und
- Fig. 19B: eine Querschnittsansicht der Lagen von Fig. 19A.

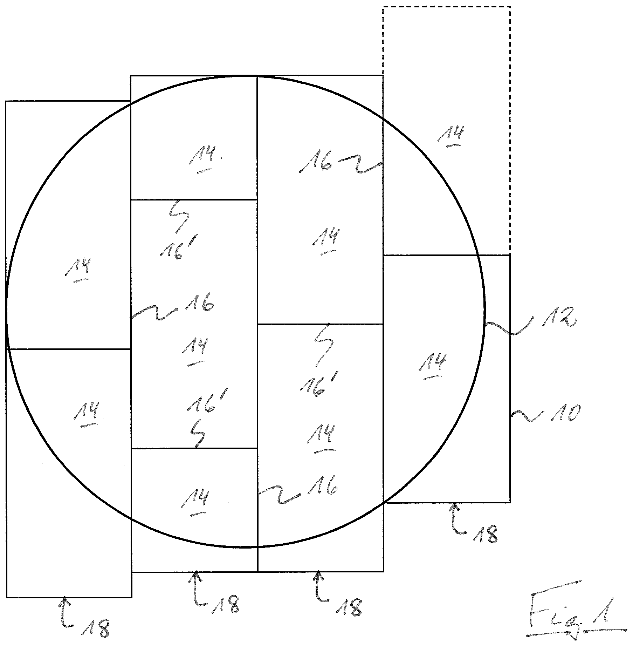

Fig. 1 zeigt eine erste Variante einer Lage 10 einer aus mehreren Lagen eines Katalysatormaterials aufgebauten Katalysatorfüllung, welche zur Anordnung in einem Reaktor vorgesehen ist, dessen Innenumfang durch eine Kreislinie 12 dargestellt ist. Im vorliegenden Ausführungsbeispiel weist der Reaktor einen Innendurchmesser von 190 mm auf.

Bei dem Katalysatormaterial kann es sich beispielsweise um einen Metallschaum handeln, welcher je nach Anwendung mit einem zusätzlichen reaktiven Stoff beschichtet sein kann. Alternativ kann das Katalysatormaterial aber auch ein Gewebe, ein Netz oder eine Gaze aufweisen.

Die Lage 10 ist aus mehreren Platten 14 eines Katalysatormaterials zusammengesetzt, welche im vorliegenden Ausführungsbeispiel rechteckig ausgebildet sind. Die meisten der Platten 14 weisen eine Länge von 100 mm und eine Breite von 50 mm auf, wobei aber auch halbe Platten 14 zum Einsatz kommen, welche quadratisch sind. Die Stärke einer Platte 14 kann im Bereich von 1 mm bis 200 mm liegen. Zur Herstellung einer an den Reaktor angepassten Kreisform der Lage 10a werden die zusammengesetzten Platten 14 entlang der Kreislinie 12 zurechtgeschnitten.

Die Platten 14 sind derart nebeneinander angeordnet, dass jeweils benachbarte Platten 14 unter Bildung einer Stoßkante 16 aneinander stoßen. Der Länge nach aneinandergereihte Platten 14 bilden ein Plattenband 18. Dabei sind benachbarte Plattenbänder 18 derart gegeneinander versetzt angeordnet, dass die Stoßkanten 16' zwischen benachbarten Platten 14 innerhalb eines Plattenbands 18 nicht mit den Stoßkanten 16' zwischen aneinandergrenzenden Platten 14 eines benachbarten Plattenbands 18 deckungsgleich ausgerichtet sind. Ein äußerstes linkes Plattenband 18 ist linksbündig mit der Kreislinie 12 ausgerichtet, während zwei mittlere Plattenbänder 18 an ihrem in Fig. 1 oberen Ende bündig mit der Kreislinie 12 ausgerichtet sind.

Die einzelnen Plattenbänder 18 können bereits vorgefertigt sein, indem die das jeweilige Plattenband 18 bildenden Platten 14 miteinander verbunden sind. Weist das Katalysatormaterial beispielsweise einen Metallschaum auf, reicht es zur Verbindung benachbarter Platten 14 aus, diese geringfügig überlappen zu lassen, z.B. über eine Länge von wenigen Millimetern, und die Überlappungsbereiche zu walzen. Alternativ zu einer reinen Überlappung können benachbarte Platten 14 eines Plattenbands 18 an ihren Stoßkanten 16 feder/feder-artig oder feder/nutartig ineinandergreifen. Auch in diesem Fall kann das Plattenband 18 zusätzlich gewalzt werden, je nach konkreter Ausbildung der Stoßkanten 16 benachbarter Platten 14 ist dies aber nicht unbedingt erforderlich. Alternativ können die Platten 14 miteinander vernäht, verschweißt, verpresst, oder aneinander getackert sein.

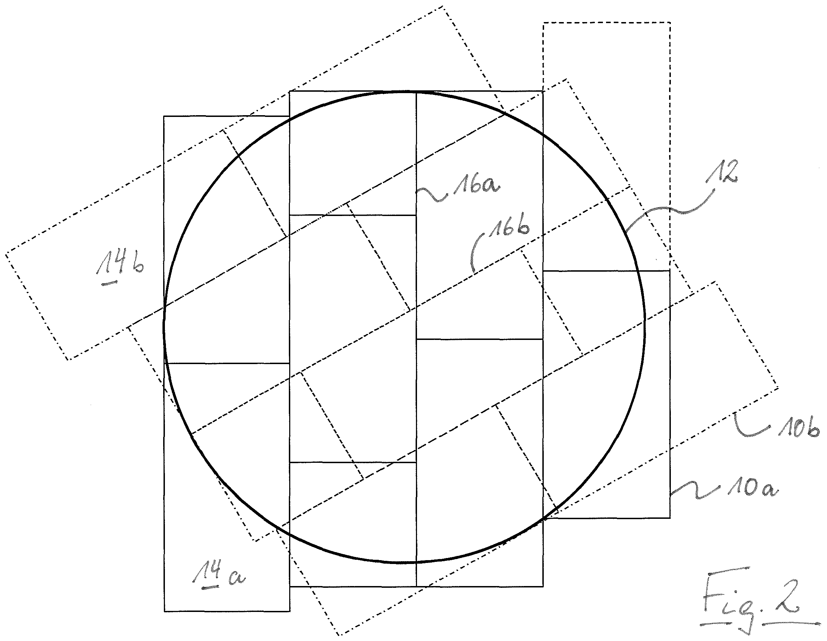

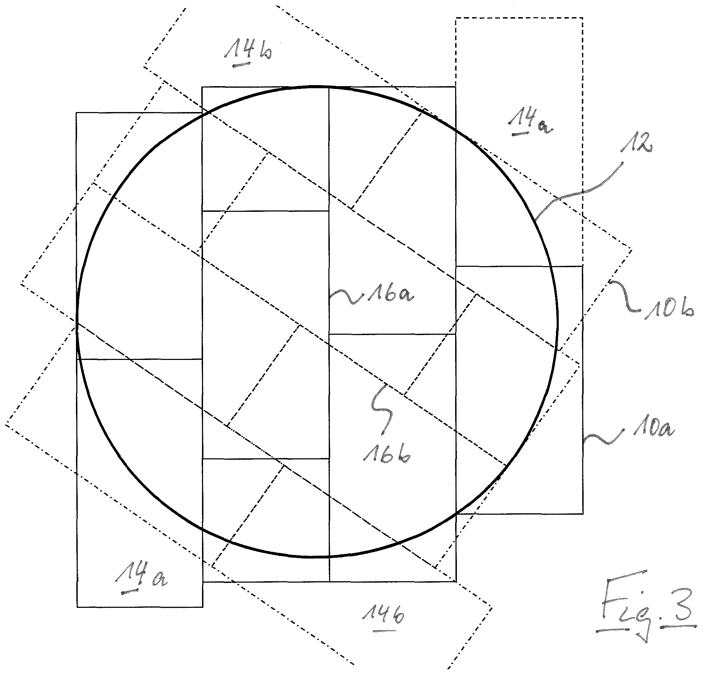

In Abhängigkeit von der gewünschten Stärke der Katalysatorfüllung und je nach Stärke der einzelnen Platten umfasst die Katalysatorfüllung wenigstens eine weitere Lage aus Katalysatormaterial, welche über einer wie in Fig. 1 dargestellten ersten Lage 10a angeordnet ist. Eine solche zweite Lage 10b kann wie die erste Lage 10a ausgebildet sein. Allerdings ist bei der Anordnung der zweiten Lage 10b auf der ersten Lage 10a zur Vermeidung unerwünschter Strömungskanäle darauf zu achten, dass die Stoßkanten 16b der zweiten Lage 10b nicht mit den Stoßkanten 16a der ersten Lage 10a deckungsgleich ausgerichtet sind. Zu diesem Zweck kann die zweite Lage 10b beispielsweise um einen Drehwinkel von 240° im Uhrzeigersinn relativ zu der ersten Lage 10a verdreht angeordnet werden, wie es in Fig. 2 dargestellt ist. Der Drehpunkt für die Verdrehung ist hierbei durch den Mittelpunkt des Reaktors bzw. der Kreislinie 12 definiert. Alternativ ist auch eine Verdrehung der zweiten Lage 10b relativ zu der ersten Lage 10a im Uhrzeigersinn um einen Drehwinkel von 125° möglich, wie es in Fig. 3 dargestellt ist. Durch beide Verdrehungen wird letztlich erreicht, dass sich die Stoßkanten 16a der ersten Lage 10a und die Stoßkanten 16b der zweiten Lage 10b zwar unter gewissen Winkeln schneiden können, aber keinesfalls kongruent übereinanderliegen.

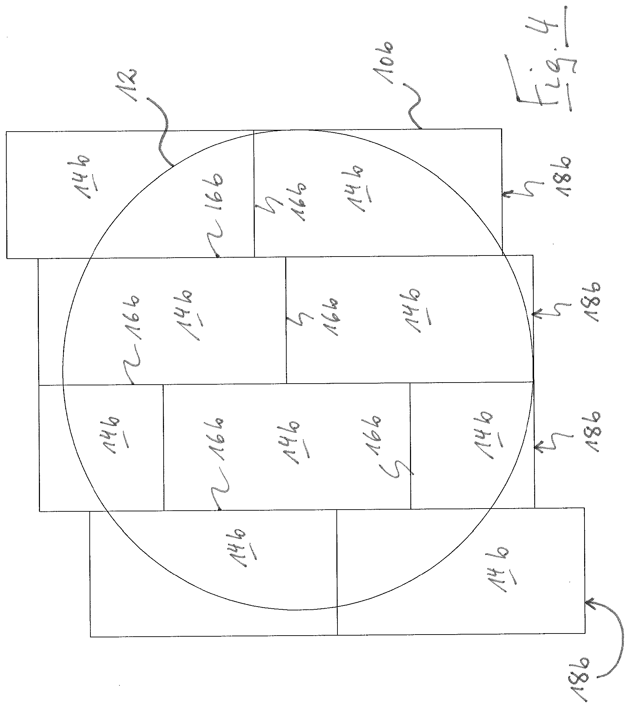

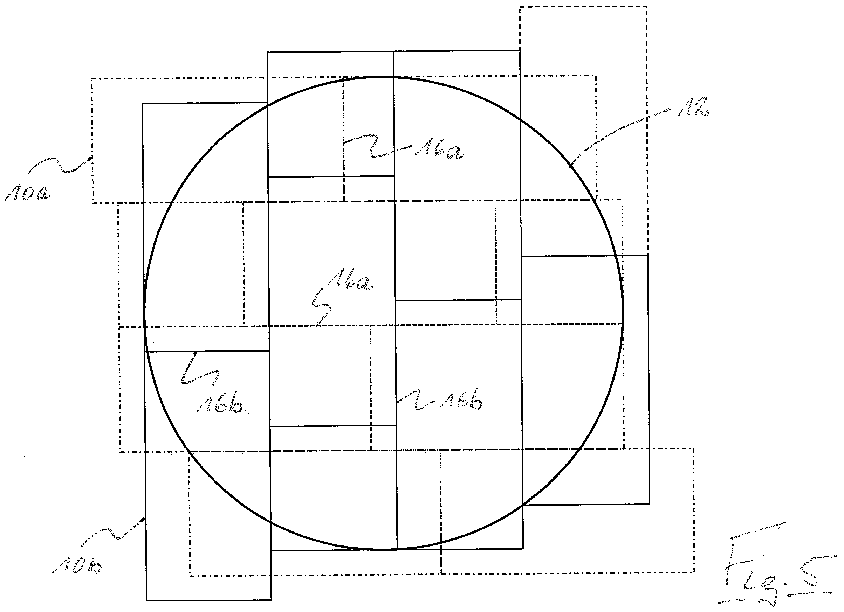

Der gleiche Effekt wird erreicht, wenn die zweite Lage 10b wie in Fig. 4 gezeigt etwas anders aufgebaut ist als die erste Lage 10a von Fig. 1 und somit eine zweite Lagenvariante bildet. Konkret ist die in Fig. 4 gezeigte zweite Lage 10b rechtsbündig mit der Kreislinie 12 ausgerichtet. Außerdem sind die einzelnen Plattenbänder 18b der zweiten Lage 10b in ihrer Längsrichtung relativ zu den Plattenbändern 18a der ersten Lage 10a verschoben und zwar derart, dass die mittleren zwei Plattenbänder 18b unten mit der Kreislinie 12 bündig abschließen. Bei der Anordnung der zweiten Lage 10b auf der ersten Lage 10a wird die erste Lage 10a außerdem nicht in der in Fig. 1 dargestellten Position platziert, sondern zusätzlich um 90° im Uhrzeigersinn gedreht, wie es in Fig. 5 dargestellt ist.

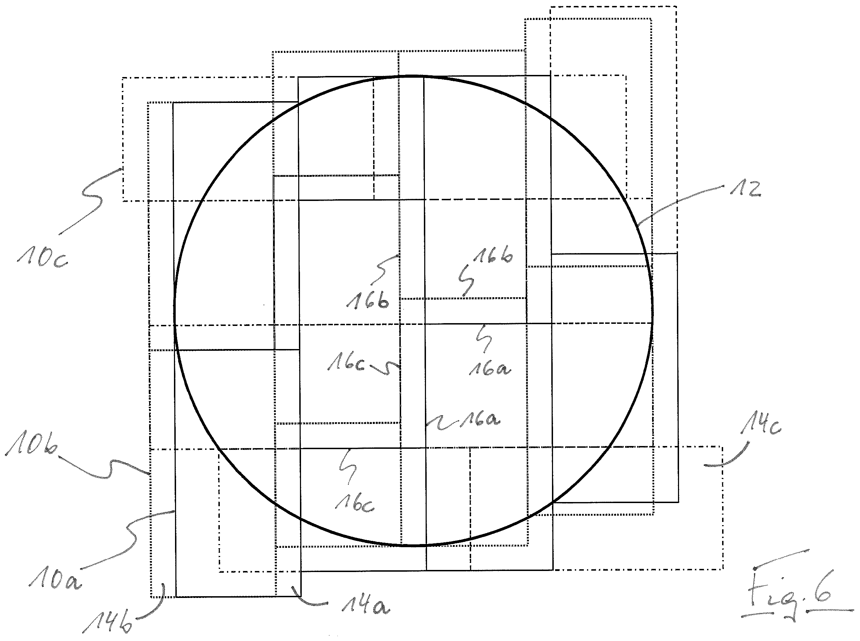

In Abhängigkeit von der gewünschten Stärke der Katalysatorfüllung und der Stärke der einzelnen Platten kann die Katalysatorfüllung zusätzlich eine aus mehreren Platten 14c zusammengesetzte dritte Lage 10c aufweisen. Dabei ist zur Vermeidung unerwünschter Strömungskanäle darauf zu achten, dass auch die Stoßkanten 16c der dritten Lage 10c zumindest nicht mit den Stoßkanten 16b der zweiten Lage 10b deckungsgleich ausgerichtet sind. Wie in Fig. 6 dargestellt ist, kann dies beispielsweise dadurch erreicht werden, dass auf einer gemäß Fig. 1 ausgebildeten ersten Lage 10a eine zweite Lage 10b gemäß Fig. 4 unverdreht angeordnet wird, d.h. hier sind die Platten 14b der zweiten Lage 10b zu den Platten 14a der ersten Lage 10a lediglich versetzt, und dass auf der zweiten Lage 10b als dritte Lage 10c schließlich die erste Lage 10a von Fig. 1 um 90° im Uhrzeigersinn verdreht angeordnet wird. Bei dieser Ausführungsform ist sichergestellt, dass die Stoßkanten 16a, 16b der ersten und zweiten Lage 10a, 10b und die Stoßkanten 16b, 16c der zweiten und dritten Lage 10b, 10c jeweils nicht miteinander deckungsgleich ausgerichtet sind. Gleichwohl liegen die Stoßkanten 16c der dritten Lage 10c aber teilweise kongruent über den Stoßkanten 16a der ersten Lage 10a, d.h. hier liegt eine gewisse Ausrichtung von Stoßkanten 16a, 16c der ersten und dritten Lage 10a, 10c vor. Dies ist jedoch nicht besonders kritisch, da jedenfalls eine Platte 14b der zweiten Lage 10b vollständig dazwischenliegt und somit die Ausbildung eines durchgehenden Strömungskanals verhindert wird.

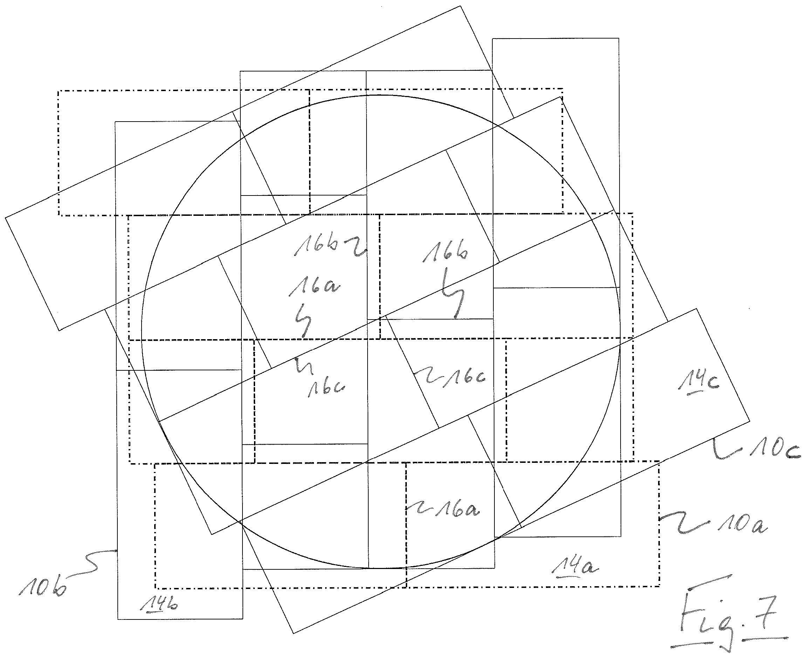

Wie in Fig. 7 dargestellt ist, lässt sich eine Ausrichtung der Stoßkanten 16a, 16b, 16c aller drei Lagen 10a, 10b, 10c vollständig vermeiden, wenn die erste Lage 10a gegenüber der in Fig. 1 gezeigten Anordnung um 270° im Uhrzeigersinn verdreht positioniert wird, hierauf die zweite Lage 10b von Fig. 4 angeordnet wird und darüber als dritte Lage 10c die zweite Lage 10b angeordnet wird und zwar gegenüber der Position von Fig. 4 um 65° im Uhrzeigersinn verdreht. Wie in Fig. 7 zu erkennen ist, schneiden sich die Stoßkanten 16a, 16b, 16c der ersten, zweiten und dritten Lage 10a, 10b, 10c, es liegen aber keine Überlagerungen der Stoßkanten 16a, 16b, 16c der verschiedenen Lagen 10a, 10b, 10c vor.

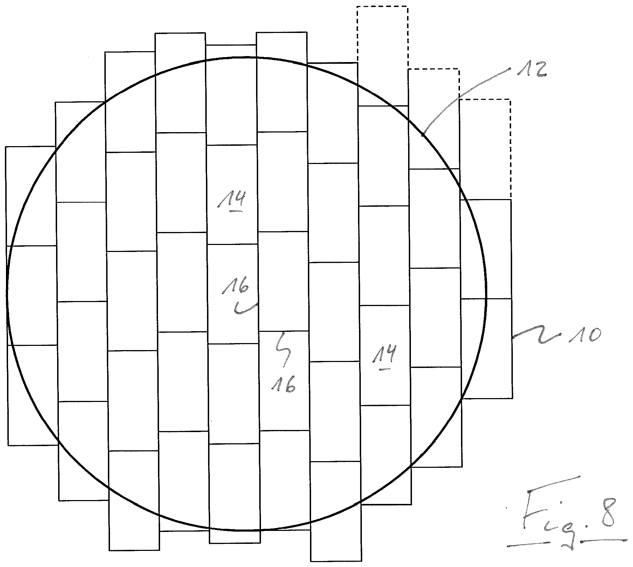

In Fig. 8 ist eine dritte Variante einer Lage 10 einer Katalysatorfüllung für einen zylindrischen Reaktor mit einem Durchmesser von 190 mm dargestellt. Diese Variante einer Lage 10 unterscheidet sich von der in Fig. 1 dargestellten Variante letztlich nur in den Abmessungen der einzelnen Platten 14, welche bei der Variante von Fig. 8 jeweils eine Länge von 40 mm und eine Breite von 20 mm aufweisen.

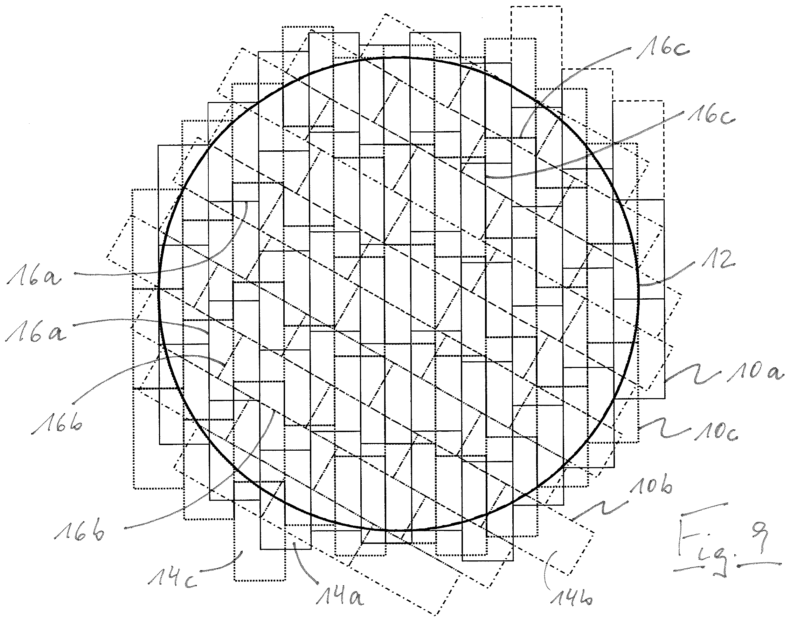

Ausgehend von der in Fig. 8 gezeigten Lage als ersten Lage 10a kann eine in Fig. 9 dargestellte dreilagige Katalysatorfüllung aufgebaut werden, indem als zweite Lage 10b die erste Lage 10a von Fig. 8 um 120° im Uhrzeigersinn verdreht und hierauf als dritte Lage 10c die erste Lage 10a von Fig. 8 um 180° im Uhrzeigersinn verdreht angeordnet werden. In diesem Lagensystem ist ebenfalls sichergestellt, dass sich die Stoßkanten 16 benachbarter Lagen 10a, 10b bzw. 10b, 10c zwar schneiden, aber nicht miteinander deckungsgleich ausgerichtet sind. Allerdings liegen einige der Stoßkanten 16c der dritten Lage 10c kongruent über den Stoßkanten 16a der ersten Lage 10. Wie bereits erwähnt, ist dies jedoch nicht besonders kritisch, da jedenfalls eine Platte 14b der zweiten Lage 10b vollständig dazwischenliegt und somit die Ausbildung eines durchgehenden Strömungskanals verhindert wird.

Anstatt die Katalysatorfüllung Lage für Lage aus einzelnen Platten 14 oder aus vorgefertigten Plattenbändern 18 aufzubauen, ist es auch möglich, die Katalysatorfüllung aus mehreren vorgefertigten Formteilen 20 zusammenzusetzen, welche jeweils aus mehreren übereinandergeschichteten und miteinander verbundenen Platten 14 bestehen. Die Anzahl der Platten 14 eines Formteils 20 kann dabei so gewählt sein, dass die Stärke des Formteils 20 bereits der gewünschten Stärke der Katalysatorfüllung entspricht. Sollte die gewünschte Stärke der Katalysatorfüllung größer sein als die Stärke der einzelnen Formteile 20, ist es selbstverständlich möglich, zwei oder mehr Lagen von Formteilen 20 übereinander anzuordnen.

Um zu verhindern, dass die Stoßkanten 16 zwischen den Platten 14 benachbarter Formteile 20 übereinanderliegen und einen unerwünschten Strömungskanal bilden, darf sich eine resultierende Seitenfläche 22 eines Formteils 20, welche an ein benachbartes Formteil 20 angrenzt, nicht rechtwinklig zu den durch die Platten 14 des Formteils 20 aufgespannten Ebenen erstrecken. Vielmehr sollten die Grenzflächen zwischen benachbarten Formteilen 20 und somit die aneinander anstoßenden Seitenflächen 22 benachbarter Formteile 20 stets schräg zu den durch die Platten 14 der Formteile 20 aufgespannten Ebenen verlaufen. Hierzu können die Formteile 20 entsprechend schräg angeschnitten sein oder die schrägen Seitenflächen 22 durch treppenartig vorstehende Platten 14 gebildet sein.

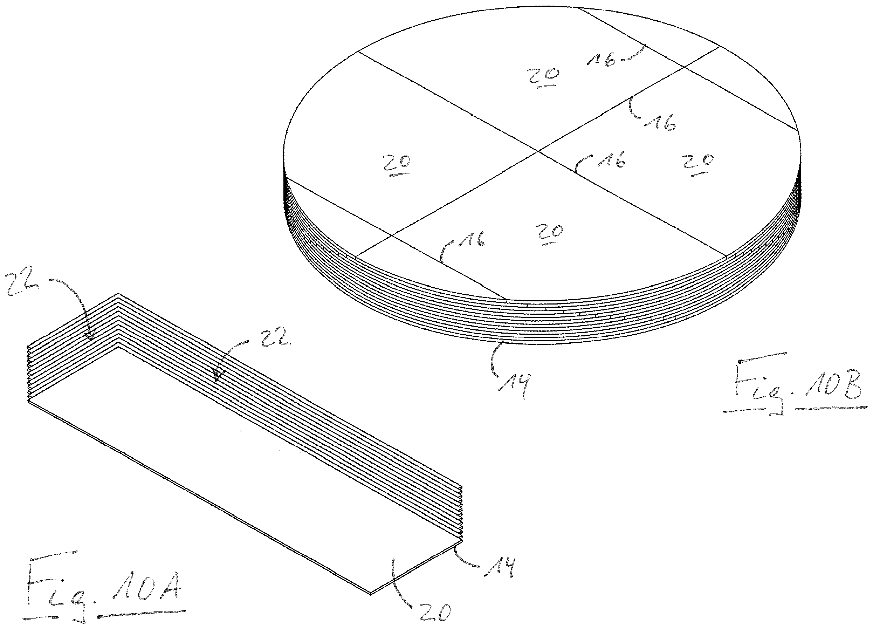

In Fig. 10A ist eine erste Ausführungsform eines Formteils 20 dargestellt, welches dieses Kriterium erfüllt. Konkret setzt sich das in Fig. 10A gezeigte Formteil 20 aus dreizehn aufeinandergeschichteten Platten 14 eines Katalysatormaterials zusammen, welche jeweils eine Breite von 80 mm und eine Länge von 200 mm aufweisen. Dabei sind die Platten 14 nicht unter Bildung eines quaderförmigen Schichtstapels bündig übereinandergeschichtet, sondern um je 5 mm in zwei Richtungen, nämlich in Richtung ihrer Länge und in Richtung ihrer Breite, versetzt angeordnet, so dass das Formteil 20 die Gestalt eines Parallelepipeds aufweist.

Zur Bildung einer Katalysatorfüllung wird eine ausreichende Anzahl von Formteilen 20 nebeneinander angeordnet und auf die Form des Reaktors zugeschnitten, in welchem die Katalysatorfüllung zum Einsatz kommen soll. In Fig. 10B ist beispielsweise eine Katalysatorfüllung dargestellt, welche aus acht der in Fig. 10A gezeigten Formteilen 20 zusammengesetzt ist und passend für einen zylindrischen Reaktor mit einem Innendurchmesser von 200 mm kreisförmig zugeschnitten ist.

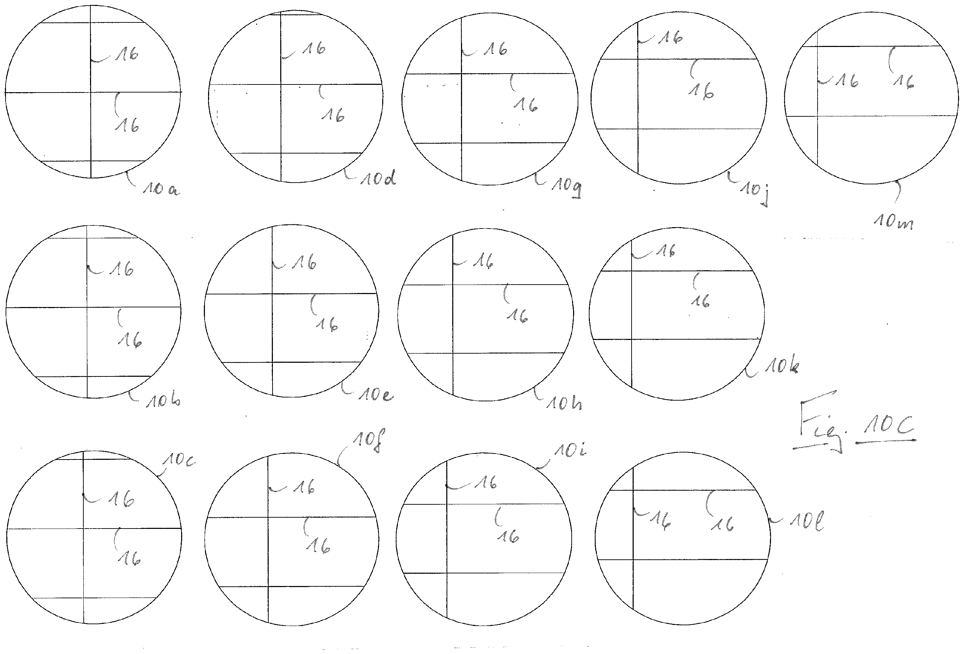

An der Oberseite der Katalysatorfüllung von Fig. 10B sind die Stoßkanten 16 der ersten Lage 10, welche hier die oberste Lage bildet, zu erkennen. Wie Fig. 10C zeigt, wandern die Stoßkanten 16 aufgrund des Versatzes der Platten 14 innerhalb der Formteile 20 ausgehend von der obersten Lage 10a durch die Katalysatorfüllung hindurch nach unten bis zur untersten Lage 10m von Lage zu Lage immer weiter nach links oben in der Figur, wodurch sichergestellt ist, dass keine zwei Stoßkanten 16 unterschiedlicher Lagen kongruent übereinanderliegen, d.h. deckungsgleich miteinander ausgerichtet sind.

Es versteht sich, dass die Gestalt der Formteile 20 nicht auf Parallelepipede beschränkt ist. Vielmehr können die Formteile 20 auch pyramidenstumpfförmig ausgebildet sein oder die Gestalt eines Trapezprismas oder eine andere geeignete Gestalt aufweisen.

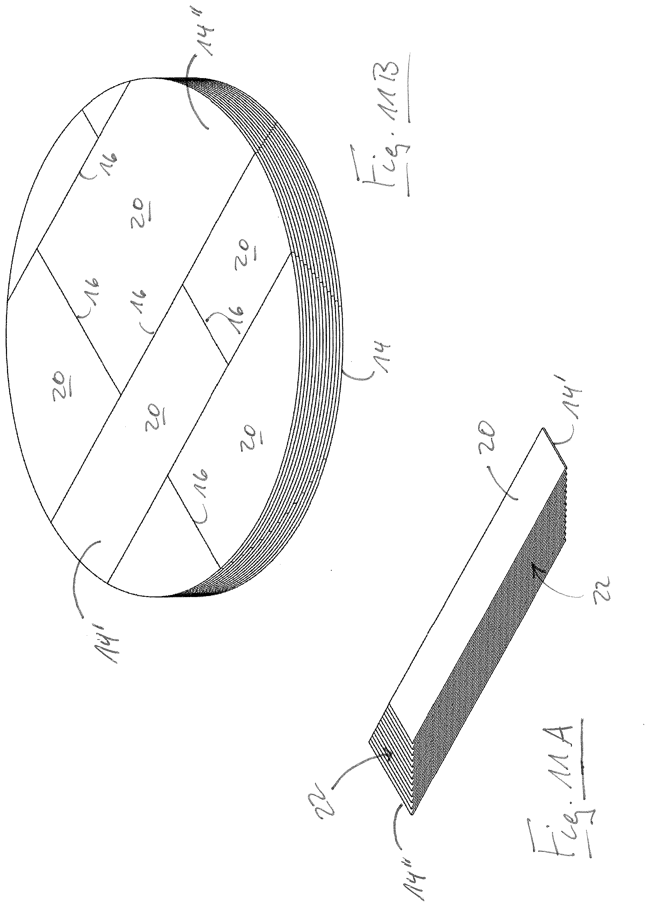

In Fig. 11A ist beispielsweise ein Formteil 20 dargestellt, welches sich aus dreizehn übereinandergeschichteten rechteckigen Platten 14 zusammensetzt, wobei die Länge aller Platten 14 gleich ist, die Breite der Platten 14 aber von oben nach unten zunimmt. Konkret beträgt die Breite der obersten Platte 14' im dargestellten Ausführungsbeispiel 44 mm, während die darunterliegende Platte eine Breite von 47 mm aufweist und auch die Breite jeder nach unten folgenden Platte um 3 mm ansteigt bis hin zur untersten Platte 14", welche eine Breite von 80 mm besitzt. Die Querschnittskontur des Formteils 20 ähnelt also einem Trapez, genauer gesagt einem Trapez mit gestuften Schrägseiten. Die Länge aller Platten 14 ist gleich und beträgt im vorliegenden Ausführungsbeispiel 200 mm. Allerdings sind die Platten 14 jeweils um 5 mm in Längsrichtung versetzt zu der darunterliegenden Platte 14 angeordnet, so dass die Kontur des Formteils 20 im Längsschnitt gesehen einem Parallelogramm ähnelt, genauer gesagt einem Parallelogramm mit gestuften Schrägseiten.

Zur Bildung einer Katalysatorfüllung werden mehrere der in Fig. 11A gezeigten Formteile 20 nebeneinander angeordnet und wie in Fig. 11B gezeigt auf eine gewünschte Form zugeschnitten, hier auf eine zylindrische Form mit einem Durchmesser von 200 mm. Die Anordnung der Formteile 20 erfolgt hierbei derart, dass mehrere Formteile 20 reihenweise der Länge nach hintereinander angeordnet werden, wobei die Formteile 20 benachbarter Reihen umgekehrt dergestalt angeordnet werden, dass innerhalb einer Reihe jeweils die schmalsten Platten 14' nach oben weisen und die breitesten Platten 14" entsprechend unten liegen, während innerhalb einer benachbarten Reihe umgekehrt die breitesten Platten 14" nach oben weisen und die schmalsten Platten 14' unten liegen. Im Querschnitt gesehen weisen benachbarte Reihen von Formteilen 20 also trapezähnliche Konturen mit abwechselnd unten- bzw. obenliegender Basis auf.

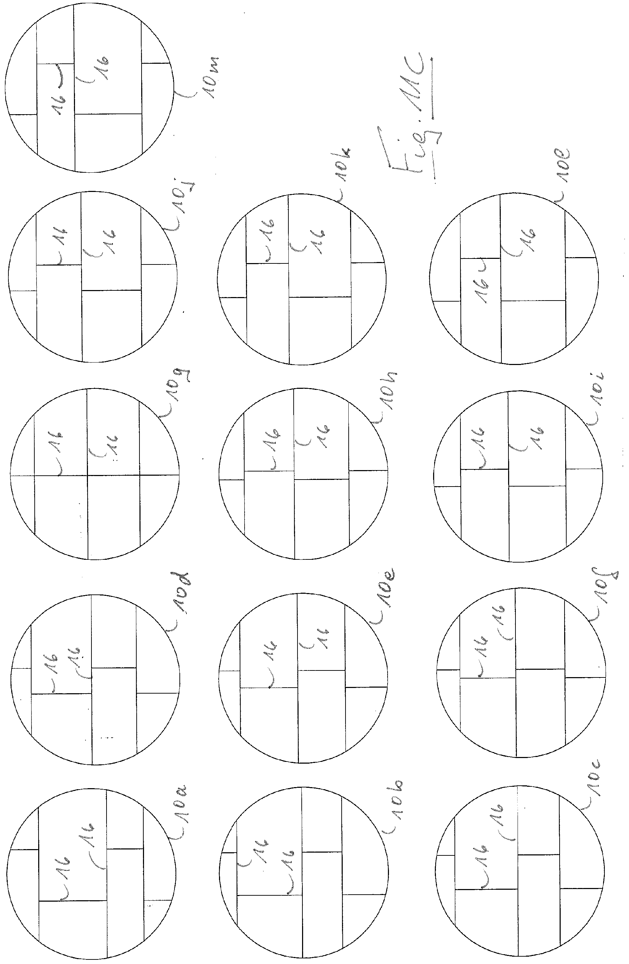

Fig. 11C zeigt wie die Stoßkanten 16 zwischen benachbarten Platten 14 von Lage 10 zu Lage 10 durch die Katalysatorfüllung hindurch ihre Position verändern. Durch die schrägen Seitenflächen 22 der Formteile 20 ist auch bei dieser Ausführungsform sichergestellt, dass durch die Katalysatorfüllung hindurch gesehen keine zwei Stoßkanten 16 kongruent übereinanderliegen bzw. deckungsgleich miteinander ausgerichtet sind.

Die Herstellung einer Katalysatorfüllung kann vereinfacht werden, wenn mehrere Formteile 20 bereits zu einem Formteilband 24 miteinander verbunden sind, wobei sich die einzelnen Platten 14 benachbarter Formteile 20 idealerweise überlappen.

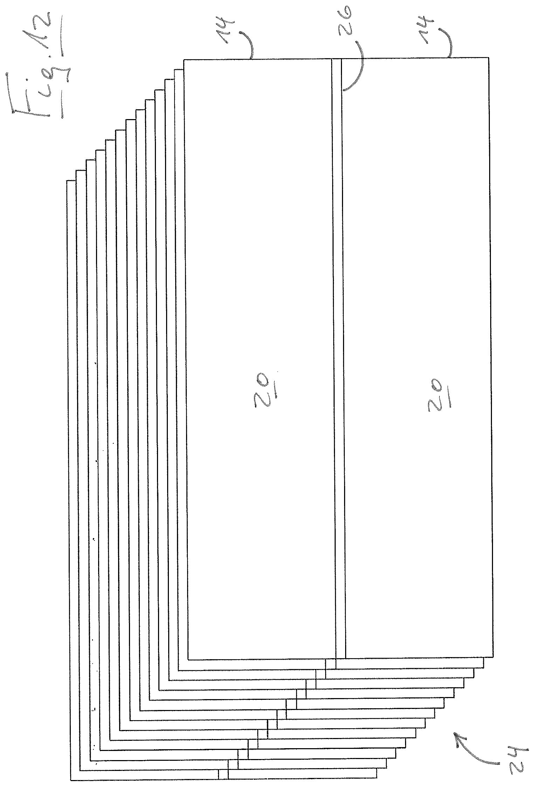

Beispielsweise zeigt Fig. 12 eine erste Ausführungsform eines Formteilbandes 24, welches aus mehreren gleichartigen Formteilen 20 zusammengesetzt ist, die jeweils die Gestalt eines Parallelepipeds aufweisen, ähnlich wie das anhand von Fig. 10A beschriebene Formteil 20. D.h. alle Platten 14 eines Formteils 20 weisen die gleiche Länge und die gleiche Breite auf, hier konkret 400 mm x 200 mm, und die Platten 14 jedes Formteils 20 sind relativ zu einer darunter liegenden Platte in zwei zueinander rechtwinklige Richtungen, nämlich in Richtung ihrer Länge und in Richtung ihrer Breite, versetzt angeordnet. Außerdem überlappen sich die Platten 14 benachbarter Formteile 20 in Überlappungsbereichen 26. Obwohl in Fig. 12 lediglich zwei Formteile 20 dargestellt sind, versteht es sich, dass, sofern ein längeres Formteilband 24 vonnöten ist, weitere gleichartige Formteile 20 an diese anschließen können.

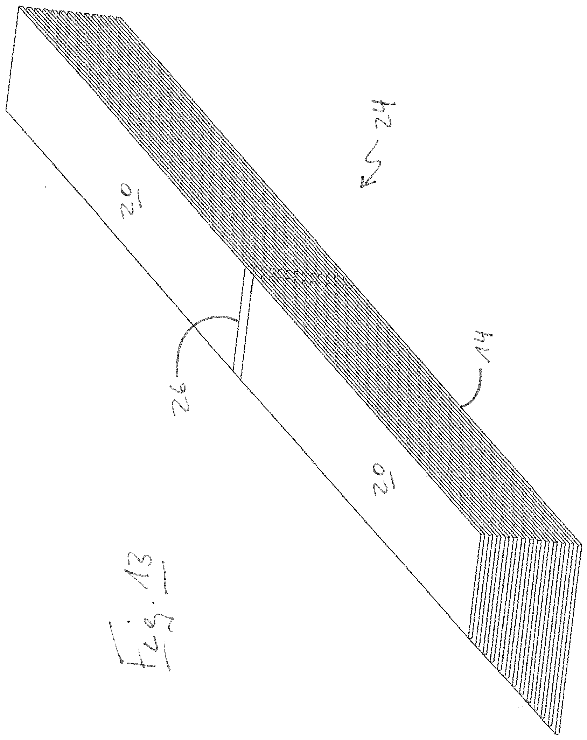

In Fig. 13 ist eine zweite Ausführungsform eines Formteilbandes 24 dargestellt, welches aus zwei Formteilen 20 zusammengesetzt ist, die im Querschnitt gesehen eine trapezähnliche Gestalt und im Längsschnitt gesehen eine parallelogrammähnliche Gestalt aufweisen. Diese Formteile 20 sind also ähnlich ausgebildet wie das in Fig. 11A gezeigte Formteil 20. Auch bei der in Fig. 13 dargestellten Ausführungsform überlappen sich die Platten 14 benachbarter Formteile 20 in Überlappungsbereichen 26. Sofern ein längeres Formteilband 24 vonnöten ist, können sich weitere gleichartige Formteile 20 an die in Fig. 13 gezeigten zwei Formteile 20 anschließen.

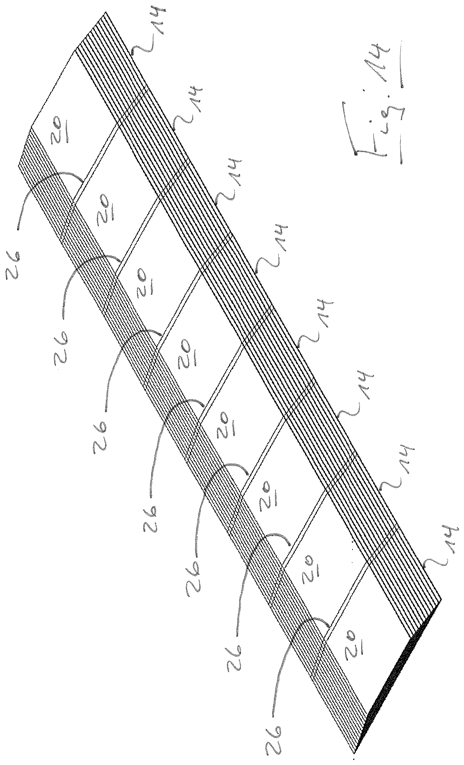

Fig. 14 zeigt eine dritte Ausführungsform eines Formteilbandes 24, welches sich aus mehreren gleichartigen Formteilen 20 zusammensetzt, wobei jedes Formteil 20 aus mehreren übereinandergeschichteten rechtwinkligen Platten 14 aufgebaut ist. Dabei nimmt die Länge jeder Platte 14 eines Formteils 20 ausgehend von der untersten Platte 14 nach oben hin ab, so dass das Formteilband 24 im Längsschnitt gesehen eine trapezähnliche Gestalt aufweist. Konkret besitzt die unterste Platte 14 eine Länge von 400 mm, wohingegen die oberste Platte 14 eine Länge von nur noch 200 mm aufweist. Die Breite aller Platten 14 eines Formteils 20 ist hingegen gleich, und die Längsränder der Platten 14 eines Formteils 20 sind derart bündig angeordnet, dass das Formteil 20 im Querschnitt gesehen eine rechteckige Kontur aufweist. Die Platten 14 benachbarter Formteile 20 überlappen sich in Überlappungsbereichen 26.

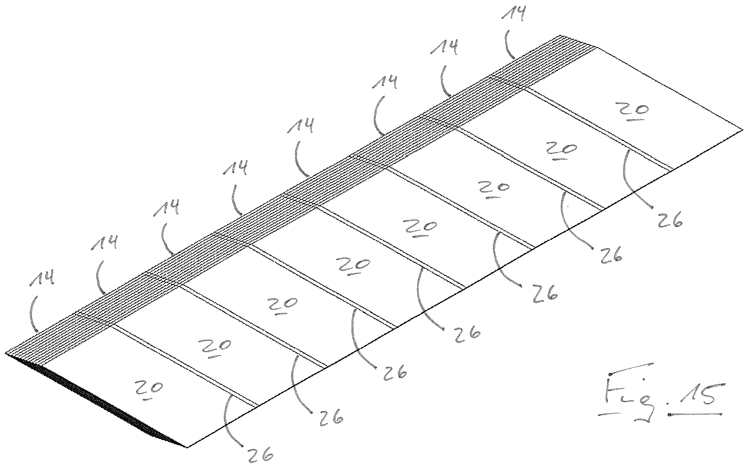

Fig. 15 zeigt eine vierte Ausführungsform eines Formteilbandes 24, welches sich aus mehreren gleichartigen Formteilen 20 zusammensetzt, wobei jedes Formteil 20 aus mehreren übereinandergeschichteten rechtwinkligen Platten 14 aufgebaut ist. Die Länge und Breite aller Platten 14 eines Formteils 20 sind jeweils gleich. Außerdem sind die Platten 14 jedes Formteils 20 relativ zu einer darunter liegenden Platte in Richtung ihrer Länge versetzt angeordnet, was dem Formteil 20 im Längsschnitt gesehen eine parallelogrammähnliche Kontur verleiht. In der dazu rechtwinkligen Richtung schließen die Platten 14 jedes Formteils 20 bündig ab, d.h. im Querschnitt gesehen weist jedes Formteil 20 eine rechteckige Kontur auf. Wie zuvor überlappen sich die Platten 14 benachbarter Formteile 20 in Überlappungsbereichen 26.

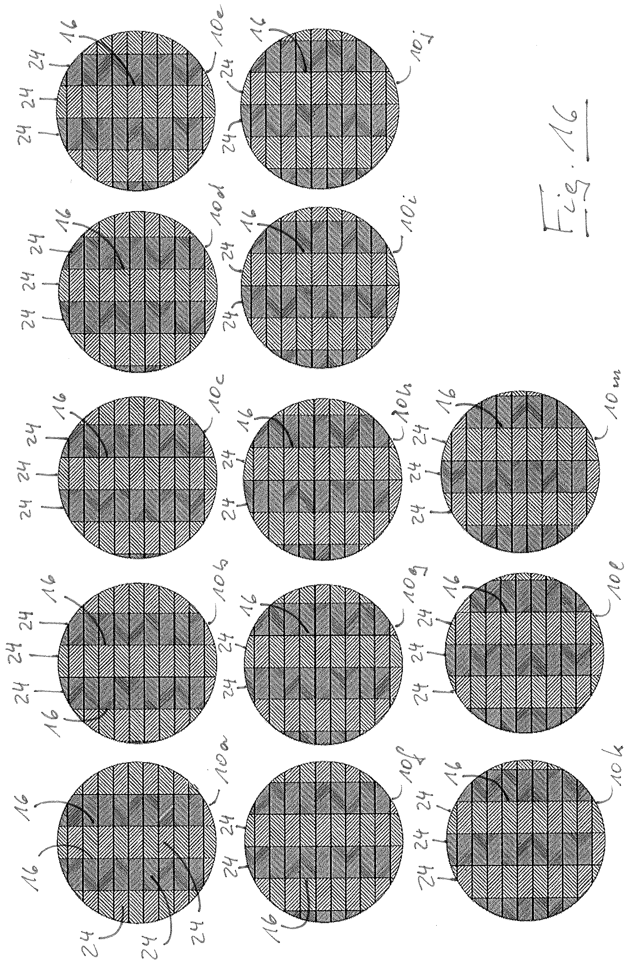

Fig. 16 zeigt die einzelnen Lagen 10a bis 10m einer dreizehnlagigen Katalysatorfüllung, die aus sechs nebeneinander angeordneten Formteilbändern 24 der in Fig. 15 dargestellten Art zusammengesetzt ist. Wie Fig. 16 zu entnehmen ist, wandern die Stoßkanten 16 zwischen benachbarten Formteilbändern 24 aufgrund des Versatzes der einzelnen Platten 14 innerhalb eines Formteilbandes 24 von Lage zu Lage immer weiter nach rechts, so dass keine dieser Stoßkanten 16 kongruent übereinander liegen, wobei letzteres nicht nur für aufeinander folgende, sondern für alle Lagen 10a bis 10m gilt.

Die voranstehend beschriebenen Katalysatorfüllungen bestehend aus rechtwinkligen Platten 14 eignen sich insbesondere für die Verwendung in Reaktoren mit planen Böden. Ist der Boden jedoch gekrümmt oder kugelförmig ausgebildet, wie beispielsweise in einem Reaktor mit Glockenboden, so erweisen sich Platten 14 mit trapezähnlicher oder kreissektorähnlicher Form als günstiger.

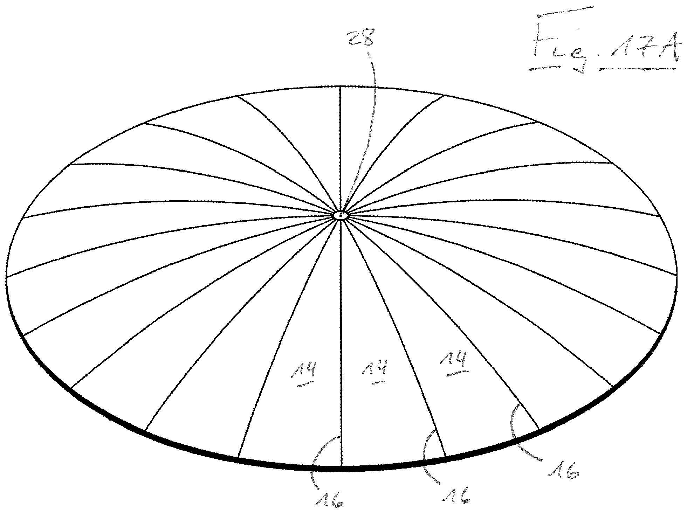

So ist in Fig. 17A eine Katalysatorfüllung für einen Reaktor mit Glockenboden und mit einem Durchmesser von z.B. 2800 mm dargestellt, welche wie zuvor mindestens zwei Lagen umfasst, die jeweils aus mehreren, im vorliegenden Ausführungsbeispiel zwanzig gleichgroßen kreissektorähnlichen Platten 14 zusammengesetzt ist, welche sich zu einer kreisförmigen Lage ergänzen, wobei sich die Spitzen der kreissektorähnlichen Platten 14 im Mittelpunkt des Kreises treffen. Benachbarte Platten 14 stoßen unter Bildung radial verlaufender Stoßkanten 16 aneinander.

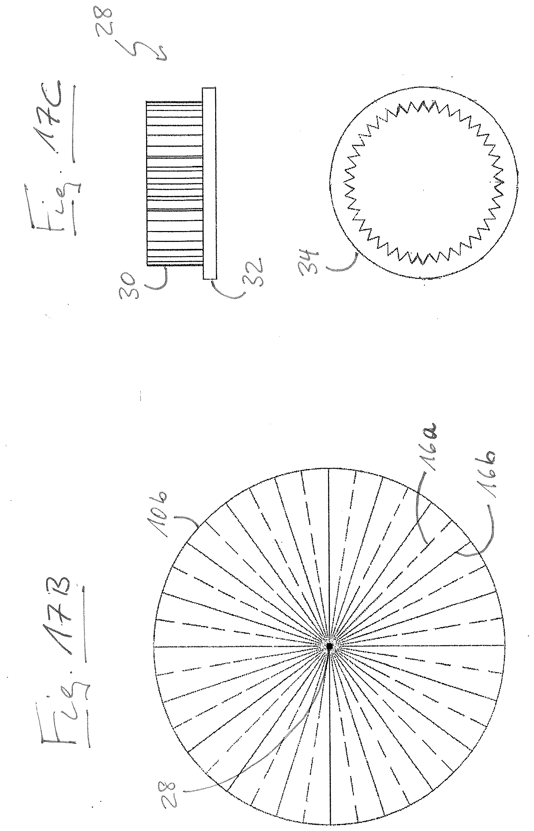

Wie in Fig. 17B zu erkennen ist, wird über einer ersten Lage (nicht dargestellt) eine entsprechende zweite Lage 10b angeordnet, welche gegenüber der ersten Lage um einen gewissen Winkel, z.B. von 9°, bezüglich des Kreismittelpunkts verdreht ist, so dass die Stoßkanten 16b (durchgezogene Linien) der zweiten Lage 10b nicht mit den Stoßkanten 16a (gestrichelte Linien) der ersten Lage deckungsgleich ausgerichtet sind, d.h. nicht exakt über diesen liegen. Es versteht sich, dass zur Vervollständigung der Katalysatorfüllung weitere Lagen vorgesehen sein können, welche ebenfalls zur jeweils darunterliegenden Lage verdreht angeordnet sind, so dass zumindest die Stoßkanten unmittelbar übereinanderliegender Lagen nicht deckungsgleich miteinander ausgerichtet sind. Idealerweise erfolgt der Winkelversatz von Lage zu Lage jeweils in die gleiche Richtung um einen Winkelbetrag, der sicherstellt, dass über die gesamte Katalysatorfüllung hinweg gesehen keine zwei Stoßkanten deckungsgleich miteinander ausgerichtet sind.

Um die Ausbildung eines unerwünschten Strömungskanals im Zentrum der Katalysatorfüllung zu verhindern, können die radial nach innen weisenden Enden der Platten 14 durch einen zentral angeordneten Positionshalter 28 festgeklemmt werden, welcher in Fig. 17C genauer dargestellt ist. Der Positionshalter 28 umfasst einen zylindrischen Grundkörper 30, an dessen unterem Ende ein radial vorspringender erster Kragen 32 fest angebracht und auf dessen oberes Ende ein radial vorspringender zweiter Kragen 34 derart anbringbar ist, dass die radial nach innen weisenden Enden der Platten 14 zwischen den Kragen 32, 34 geklemmt werden. Der zylindrischen Grundkörper 30 weist an seiner Mantelfläche Winkelmarkierungen auf, welche die Sollpositionen der Platten 14 anzeigen, wodurch der Positionshalter 28 nicht nur die positionierten Platten 14 fixiert, sondern auch das Positionieren der Platten 14 selbst erleichtert, indem er die korrekte Anordnung der Platten 14 vorgibt.

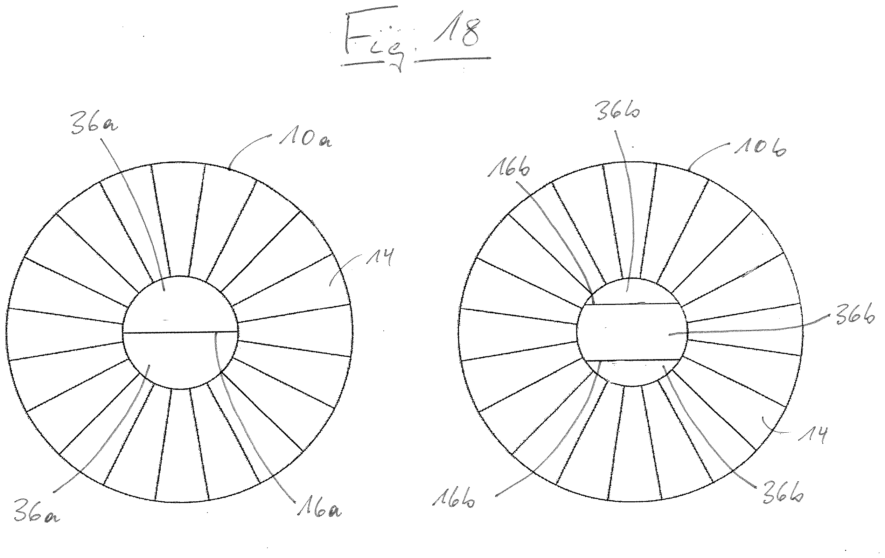

Anstelle eines Positionshalters 28 kann der zentrale Bereich jeder Lage 10 wie in Fig. 18 gezeigt auch durch mehrere nebeneinander angeordnete und kreisförmig zugeschnittene Zentralplatten 36 ausgefüllt sein, welche die kreissektorähnlichen Platten 14 überlappen. Damit die zwischen benachbarten Zentralplatten 36a ausgebildeten Stoßkanten 16a einer Lage 10a und die zwischen benachbarten Zentralplatten 36b ausgebildeten Stoßkanten 16b einer darüber liegenden Lage 10b nicht deckungsgleich miteinander ausgerichtet sind, sind die Zentralplatten 36 von Lage zu Lage versetzt zueinander angeordnet. Alternativ oder zusätzlich können die Zentralplatten 36 aufeinanderfolgender Lagen 10 auch verdreht zueinander angeordnet sein.

Es versteht sich, dass je nach Größe des durch die Zentralplatten 36 ausgefüllten Zentralbereichs die ringförmig angeordneten Platten 14 nicht mehr kreissektorähnlich ausgebildet zu sein brauchen, sondern stattdessen kürzer, d.h. eher trapezähnlich ausgebildet sein können.

Des Weiteren versteht es sich, dass im Falle eines ausreichend kleinen Zentralbereichs dieser auch durch eine einzelne, insbesondere kreisförmig zugeschnittene, Zentralplatte 36 ausgefüllt sein kann.

Sofern innerhalb einer Lage 10 die Zentralplatte(n) 36 und die ringförmig angeordneten Platten 14 nicht überlappen, sondern unter Bildung einer kreislinienförmigen Stoßkante aneinanderstoßen, sollte(n) zur Vermeidung eines unerwünschten Strömungskanals eine entsprechende Zentralplatte 36 bzw. entsprechende Zentralplatten 36 einer darüber liegenden Lage 10 einen anderen Durchmesser aufweisen als die darunter liegende(n) Zentralplatte(n) 36. Hierbei sind sowohl die Lagentypen A-B-A-B..., A-B-C-B-A-B-C..., A-B-C-A-B-C... als auch A-B-C-D-E... möglich. Bevorzugt ändert sich der Durchmesser der Zentralplatte(n) 36 von Lage zu Lage über die gesamte Katalysatorfüllung hinweg. Beispielsweise kann der Durchmesser der Zentralplatte(n) 36 von Lage zu Lage stetig zunehmen oder abnehmen.

Weiterhin kann es vorteilhaft sein, wenn der Durchmesser der Zentralplatte(n) in einem Muster zu- und abnimmt. Hierdurch kann die Position einer Lage entlang der Höhe des Katalysatorbettes exakt definiert werden. Es ist auch hierbei darauf zu achten, dass sich die Stoßkanten zweier aufeinanderfolgender Lagen nicht überlappen. Bevorzugt hat die Zentralplatte jeder Lage einen von allen anderen Lagen verschieden Durchmesser.

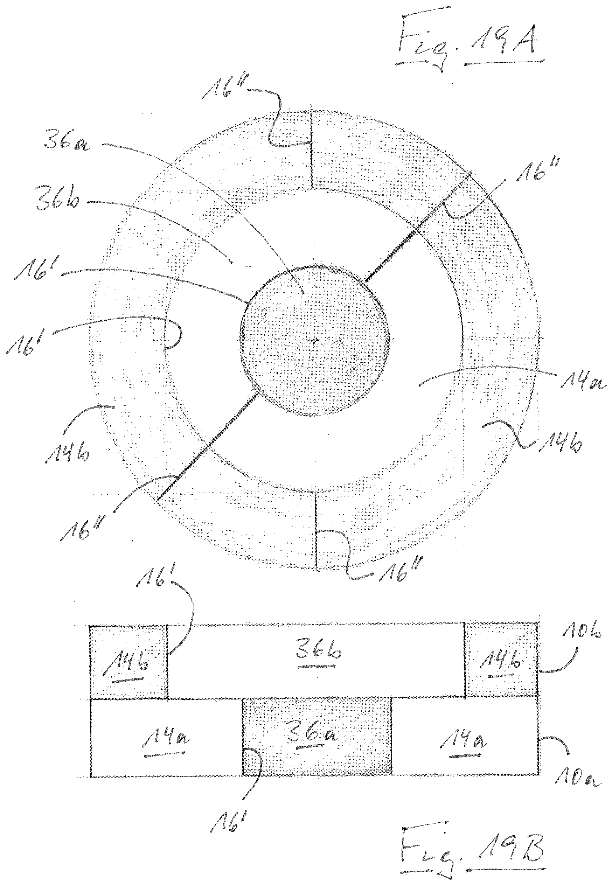

In Fig. 19 ist eine Ausführungsform gezeigt, bei welcher eine kreisförmige Zentralplatte 36 nur noch von zwei radial außen an die Zentralplatte 36 angrenzende und sich zu einem geschlossenen Plattenring ergänzende ringsegmentähnliche Platten 14 umgeben ist. Im dargestellten Ausführungsbeispiel erstrecken sich beide ringsegmentähnlichen Platten 14 über einen Winkelbereich von 180°, d.h. jede ringsegmentähnliche Platte 14 bildet einen Halbring. Grundsätzlich können sich die ringsegmentähnliche Platten 14 aber auch über unterschiedliche Winkelbereiche erstrecken, oder es können sich mehr als zwei ringsegmentähnliche Platten 14 zu einem geschlossenen Ring ergänzen, z.B. drei ringsegmentähnliche Platten 14, welche sich jeweils über einen Winkelbereich von 120° erstrecken. Des Weiteren ist der Lagenaufbau nicht auf eine Zentralplatte 36 und einen Plattenring beschränkt. So können beispielsweise auch mehr als zwei Plattenringe um die Zentralplatte 36 herum angeordnet sein, von denen sich jeder aus zwei oder mehr ringsegmentähnlichen Platten 14 zusammensetzt.

Eine Lage 10 der in Fig. 19 gezeigten Art weist sowohl in Umfangsrichtung verlaufende Stoßkanten 16' als auch sich radial restreckende Stoßkanten 16" auf. Zur Vermeidung unerwünschter Strömungskanäle ist wie bei den voranstehend beschriebenen Ausführungsformen darauf zu achten, dass sich die Stoßkanten 16 zweier aufeinanderfolgender Lagen 10 nicht überlappen.

Wie anhand von Fig. 18 bereits erläutert weisen die Zentralplatten 36a, 36b und die dazugehörigen Plattenringe aufeinander folgender Lagen 10a, 10b zu diesem Zweck zum einen unterschiedliche Durchmesser auf. Zum anderen sind die ringsegmentähnlichen Platten 14a der einen Lage 10a um das Zentrum der Zentralplatten 36a, 36b herum relativ zu den ringsegmentähnlichen Platten 14b der darauffolgenden Lage 10b verdreht angeordnet.

Der Vollständigkeit halber sei darauf hingewiesen, dass eine aus kreissektorähnlichen, trapezähnlichen oder ringsegmentähnlichen Platten 14 aufgebaute Katalysatorfüllung nicht nur in Reaktoren mit Reaktoren mit Glockenböden, sondern ebenso gut in Reaktoren mit planen Böden zum Einsatz kommen kann.

### Bezugszeichenliste

- 10: Lage
- 10a: erste Lage
- 10b: zweite Lage
- 10c: dritte Lage
- 12: Kreislinie
- 14: Platte
- 16: Stoßkante
- 18: Plattenband
- 20: Formteil
- 22: Seitenfläche
- 24: Formteilband
- 26: Überlappungsbereich
- 28: Positionshalter
- 30: Grundkörper
- 32: Kragen
- 34: Kragen
- 36: Zentralplatte

## Patentansprüche

1. Katalysatorfüllung umfassend
eine erste Lage (10a) eines plattenförmigen Katalysatormaterials und eine darüber liegende zweite Lage (10b) eines plattenförmigen Katalysatormaterials,
wobei das Katalysatormaterial der ersten Lage (10a) wenigstens zwei Platten (14a) umfasst, die jeweils unter Bildung einer Stoßkante (16a) aneinander stoßen,
wobei das Katalysatormaterial der zweiten Lage (10b) wenigstens zwei Platten (14b) umfasst, die jeweils unter Bildung einer Stoßkante (16b) aneinander stoßen, und
wobei die Platten (14b) der zweiten Lage (10b) relativ zu den Platten der ersten Lage (10a) derart ausgebildet und/oder angeordnet sind, dass bei einer Projektion der Stoßkante(n) (16a) der ersten Lage (10a) und der Stoßkante(n) (16b) der zweiten Lage (10b) in eine gemeinsame Ebene keine Stoßkante (16a) der ersten Lage (10a) mehr als einen gemeinsamen Punkt mit einer Stoßkante (16b) der zweiten Lage (10b) aufweist,
**dadurch gekennzeichnet, dass** das Katalysatormaterial einen Metallschaum aufweist.

2. Katalysatorfüllung nach Anspruch 1,
**dadurch gekennzeichnet , dass**
eine dritte Lage (10c) eines plattenförmigen Katalysatormaterials über der zweiten Lage (10b) des plattenförmigen Katalysatormaterials angeordnet ist, wobei das Katalysatormaterial der dritten Lage (10c) wenigstens zwei Platten (14c) umfasst, die jeweils unter Bildung einer Stoßkante (16c) aneinander stoßen, wobei die Platten (14c) der dritten Lage (10c) relativ zu den Platten (14b) der zweiten Lage (10b) derart ausgebildet und/oder angeordnet sind, dass bei einer Projektion der Stoßkante(n) (16b) der zweiten Lage (10b) und der Stoßkante(n) (16c) der dritten Lage (10c) in eine gemeinsame Ebene keine Stoßkante (16b) der zweiten Lage (10a) mehr als einen gemeinsamen Punkt mit einer Stoßkante (16c) der dritten Lage (10c) aufweist.

3. Katalysatorfüllung nach Anspruch 2,
**dadurch gekennzeichnet , dass**
die Stoßkante bzw. Stoßkanten (16c) der dritten Lage (10c) mit der Stoßkante bzw. den Stoßkanten (16a) der ersten Lage (10a) deckungsgleich ausgerichtet ist bzw. sind.

4. Katalysatorfüllung nach Anspruch 2,
**dadurch gekennzeichnet , dass**
bei einer Projektion der Stoßkante(n) (16a) der ersten Lage (10a) und der Stoßkante(n) (16c) der dritten Lage (10c) in eine gemeinsame Ebene keine Stoßkante (16a) der ersten Lage (10a) mehr als einen gemeinsamen Punkt mit einer Stoßkante (16c) der dritten Lage (10c) aufweist.

5. Katalysatorfüllung nach zumindest einem der vorstehenden Ansprüche,
**gekennzeichnet durch**
eine Vielzahl von übereinander liegenden Lagen (10) eines plattenförmigen Katalysatormaterials, die jeweils wenigstens zwei unter Bildung einer Stoßkante (16) aneinander stoßende Platten (14) umfassen, wobei die Platten (14) aller Lagen (10) derart ausgebildet und/oder zueinander angeordnet sind, dass bei einer Projektion der Stoßkanten (16) aller Lagen (10) in eine gemeinsame Ebene keine zwei Stoßkanten (16) unterschiedlicher Lagen (10) mehr als einen gemeinsamen Punkt aufweisen.

6. Katalysatorfüllung nach zumindest einem der vorstehenden Ansprüche,
**dadurch gekennzeichnet , dass**
die Platten (14a, 14b) der ersten und zweiten Lage (10a, 10b) und insbesondere jeder weiteren darüber liegenden Lage (10) rechteckig ausgebildet sind.

7. Katalysatorfüllung nach zumindest einem der vorstehenden Ansprüche,
**dadurch gekennzeichnet , dass**
mehrere Platten (14) einer Lage (10) zu einem Plattenband (18) verbunden sind und zwei aneinander stoßende Plattenbänder (18) eine Stoßkante (16) definieren.

8. Katalysatorfüllung nach zumindest einem der vorstehenden Ansprüche,
**dadurch gekennzeichnet , dass**
sich benachbarte Platten (14) eines Plattenbands (18) jeweils überlappen.

9. Katalysatorfüllung nach zumindest einem der vorstehenden Ansprüche, **dadurch gekennzeichnet , dass**
die Platten (14) einer Lage (10) zumindest annähernd gleiche Abmessungen aufweisen; und/oder
die Platten (14) der ersten und zweiten Lage (10a, 10b) und insbesondere jeder weiteren darüber liegenden Lage (10) zumindest annähernd gleiche Abmessungen aufweisen.

10. Katalysatorfüllung nach zumindest einem der Ansprüche 1 bis 5,
**dadurch gekennzeichnet , dass**
die Platten (14a, 14b) der ersten und zweiten Lage (10a, 10b) und insbesondere jeder weiteren darüber liegenden Lage (10) trapezähnlich oder kreissektorähnlich ausgebildet sind.

11. Katalysatorfüllung nach Anspruch 10,
**dadurch gekennzeichnet , dass**
die Platten (14a, 14b) der ersten und zweiten Lage (10a, 10b) und insbesondere jeder weiteren darüber liegenden Lage (10) jeweils unter Bildung eines Plattenkreisringes angeordnet sind.

12. Katalysatorfüllung nach Anspruch 11,
**dadurch gekennzeichnet , dass**
die Innendurchmesser der Plattenkreisringe aufeinander folgender Lagen (10) verschieden sind und/oder
ein Innenkreis jedes Plattenkreisringes durch wenigstens eine Zentralplatte (36) ausgefüllt ist.

13. Katalysatorfüllung nach Anspruch 11,
**dadurch gekennzeichnet , dass**
die Innendurchmesser der Plattenkreisringe aller Lagen (10) zumindest annähernd gleich sind und/oder
ein durch die Plattenkreisringe definierter Zentralbereich durch ein Abschlussstück, insbesondere durch ein die Platten (14) zusammenhaltendes Abschlussstück, verschlossen ist.

14. Katalysatorfüllung nach zumindest einem der vorstehenden Ansprüche,
**gekennzeichnet durch**
wenigstens einen Positionsgeber und/oder Positionshalter (28), welcher die Position einer Lage (10) von Katalysatormaterial zu einer darunter liegenden Lage (10) von Katalysatormaterial definiert.

15. Katalysatorfüllung nach zumindest einem der vorstehenden Ansprüche,
dadurch **g e k e n n z e ichn e t** , dass
mehrere übereinander liegende Platten (14) zu einem Formteil (20) in Form eines in zumindest einer Richtung schräg verschobenen Plattenstapels verbunden sind.

## Claims

1. A catalyst filling comprising
a first layer (10a) of a planar catalyst material and a second layer (10b) of a planar catalyst material disposed thereabove,
wherein the catalyst material of the first layer (10a) comprises at least two plates (14a) which each abut one another while forming an abutment edge (16a);
wherein the catalyst material of the second layer (10b) comprises at least two plates (14b) which each abut one another while forming an abutment edge (16b); and
wherein the plates (14b) of the second layer (10) are configured and/or arranged relative to the plates of the first layer (10a) such that on a projection of the abutment edge(s) (16a) of the first layer (10a) and of the abutment edge(s) (16b) of the second layer (10b) into a common plane, no abutment edge (16a) of the first layer (10a) has more than one common point with an abutment edge (16b) of the second layer (10b),
**characterized in that** the catalyst material has a metal foam.

2. A catalyst filling in accordance with claim 1,
**characterized in that**
a third layer (10c) of a planar catalyst material is arranged above the second layer (10b) of the planar catalyst material, with the catalyst material of the third layer (10c) comprising at least two plates (14c) which each abut one another while forming an abutment edge (16c), with the plates (14c) of the third layer (10c) being configured and/or arranged relative to the plates (14b) of the second layer (10b) such that on a projection of the abutment edge(s) (16b) of the second layer (10b) and of the abutment edge(s) (16c) of the third layer (10c) into a common plane, no abutment edge (16b) of the second layer (10a) has more than one common point with an abutment edge (16c) of the third layer (10c).

3. A catalyst filling in accordance with claim 2,
**characterized in that**
the abutment edge or abutment edges (16c) of the third layer (10c) is or are congruently aligned with the abutment edge or with the abutment edges (16a) of the first layer (10a).

4. A catalyst filling in accordance with claim 2,
**characterized in that**,
on a projection of the abutment edges (16a) of the first layer (10a) and of the abutment edges (16c) of the third layer (10c) into a common plane, no abutment edge (16a) of the first layer (10a) has more than one common point with an abutment edge (16c) of the third layer (10c).

5. A catalyst filling in accordance with at least one of the preceding claims,
**characterized by**
a plurality of layers (10) of a planar catalyst material which are disposed above one another and which each comprise at least two plates (14) abutting one another while forming an abutment edge (16), with the plates (14) of all the layers (10) being configured and/or arranged with respect to one another such that on a projection of the abutment edges (16) of all the layers (10) into a common plane, no two abutment edges (16) of different layers (10) have more than one common point.

6. A catalyst filling in accordance with at least one of the preceding claims,
**characterized in that**
the plates (14a, 14b) of the first and second layers (10a, 10b) and in particular of every further layer (10) disposed thereabove are formed as rectangular.

7. A catalyst filling in accordance with at least one of the preceding claims,
**characterized in that**
a plurality of plates (14) of a layer (10) are connected to form a plate band (18) and two mutually abutting plate bands (18) define an abutment edge (16).

8. A catalyst filling in accordance with at least one of the preceding claims,
**characterized in that**
adjacent plates (14) of a plate band (18) respectively overlap.

9. A catalyst filling in accordance with at least one of the preceding claims, **characterized in that**
the plates (14) of a layer (10) have at least approximately the same dimensions; and/or
**in that** the plates (14) of the first and second layers (10a, 10b) and in particular of every further layer (10) disposed thereabove have at least approximately the same dimensions.

10. A catalyst filling in accordance with at least one of the claims 1 to 5,
**characterized in that**
the plates (14a, 14b) of the first and second layers (10a, 10b) and in particular of every further layer (10) disposed thereabove are formed as trapezoid-like or sector-like.

11. A catalyst filling in accordance with claim 10,
**characterized in that**
the plates (14a, 14b) of the first and second layers (10a, 10b) and in particular of every further layer (10) disposed thereabove are each arranged while forming a circular plate ring.

12. A catalyst filling in accordance with claim 11,
**characterized in that**
the inner diameters of the circular plate rings of consecutive layers (10) are different; and/or
**in that** an inner circle of each circular plate ring is filled by at least one central plate (36).

13. A catalyst filling in accordance with claim 11,
**characterized in that**
the inner diameters of the circular plate rings of all the layers (10) are at least approximately the same; and/or
**in that** a central region defined by the circular plate rings is closed by an end cap, in particular by an end cap holding the plates (14) together.

14. A catalyst filling in accordance with at least one of the preceding claims,
**characterized by**
at least one locator and/or position holder (28) which defines the position of a layer (10) of catalyst material with respect to a layer (10) of catalyst material disposed thereunder.

15. A catalyst filling in accordance with at least one of the preceding claims,
**characterized in that**
a plurality of plates (14) disposed above one another are connected to a molding (20) in the form of a plate stack obliquely displaced in at least one direction.

## Revendications

1. Remplissage de catalyseur comprenant
une première couche (10a) d'un matériau catalyseur en forme de plaque et une deuxième couche (10b) d'un matériau catalyseur en forme de plaque qui la recouvre,
dans lequel
le matériau catalyseur de la première couche (10a) comprend au moins deux plaques (14a) qui se rejoignent en formant un bord de jointure (16a), le matériau catalyseur de la deuxième couche (10b) comprend au moins deux plaques (14b) qui se rejoignent en formant un bord de jointure (16b),
et
les plaques (14b) de la deuxième couche (10b) sont réalisées et/ou disposées par rapport aux plaques de la première couche (10a) de telle sorte que, lors d'une projection dans un plan commun du ou des bords de jointure (16a) de la première couche (10a) et du ou des bords de jointure (16b) de la deuxième couche (10b), aucun bord de jointure (16a) de la première couche (10a) ne présente plus d'un point commun avec un bord de jointure (16b) de la deuxième couche (10b),
**caractérisé en ce que**
le matériau catalyseur contient une mousse métallique.

2. Remplissage de catalyseur selon la revendication 1,
**caractérisé en ce que**
une troisième couche (10c) d'un matériau catalyseur en forme de plaque est disposée au-dessus de la deuxième couche (10b) du matériau catalyseur en forme de plaque, le matériau catalyseur de la troisième couche (10c) comprenant au moins deux plaques (14c) qui se rejoignent en formant un bord de jointure (16c), les plaques (14c) de la troisième couche (10c) étant réalisées et/ou disposées par rapport aux plaques (14b) de la deuxième couche (10b) de telle sorte que, lors d'une projection dans un plan commun du ou des bords de jointure (16b) de la deuxième couche (10b) et du ou des bords de jointure (16c) de la troisième couche (10c), aucun bord de jointure (16b) de la deuxième couche (10a) ne présente plus d'un point commun avec un bord de jointure (16c) de la troisième couche (10c).

3. Remplissage de catalyseur selon la revendication 2,
**caractérisé en ce que**
le ou les bords de jointure (16c) de la troisième couche (10c) est ou sont orientés en coïncidence avec le ou les bords de jointure (16a) de la première couche (10a).

4. Remplissage de catalyseur selon la revendication 2,
**caractérisé en ce que**
lors d'une projection dans un plan commun du ou des bords de jointure (16a) de la première couche (10a) et du ou des bords de jointure (16c) de la troisième couche (10c), aucun bord de jointure (16a) de la première couche (10a) ne présente plus d'un point commun avec un bord de jointure (16c) de la troisième couche (10c).

5. Remplissage de catalyseur selon l'une au moins des revendications précédentes,
**caractérisé par**
une pluralité de couches (10) superposées d'un matériau catalyseur en forme de plaque, qui comprennent chacune au moins deux plaques (14) qui se rejoignant en formant un bord de jointure (16), les plaques (14) de toutes les couches (10) étant réalisées et/ou disposées les unes par rapport aux autres de telle sorte que, lors d'une projection dans un plan commun des bords de jointure (16) de toutes les couches (10), deux bords de jointure (16) de couches (10) différentes ne présentent pas plus d'un point commun.

6. Remplissage de catalyseur selon l'une au moins des revendications précédentes,
**caractérisé en ce que**
les plaques (14a, 14b) des première et deuxième couches (10a, 10b) et en particulier de chaque autre couche (10) située au-dessus sont de forme rectangulaire.

7. Remplissage de catalyseur selon l'une au moins des revendications précédentes,
**caractérisé en ce que**
plusieurs plaques (14) d'une couche (10) sont reliées en une bande de plaques (18) et deux bandes de plaques (18) qui se rejoignent définissent un bord de jointure (16).

8. Remplissage de catalyseur selon l'une au moins des revendications précédentes,
**caractérisé en ce que**
des plaques voisines (14) respectives d'une bande de plaques (18) se chevauchent.

9. Remplissage de catalyseur selon l'une au moins des revendications précédentes,
**caractérisé en ce que**
les plaques (14) d'une couche (10) présentent des dimensions au moins approximativement identiques ; et/ou
les plaques (14) des première et deuxième couches (10a, 10b) et en particulier de chaque autre couche (10) située au-dessus présentent des dimensions au moins approximativement identiques.

10. Remplissage de catalyseur selon l'une au moins des revendications 1 à 5, **caractérisé en ce que**
les plaques (14a, 14b) des première et deuxième couches (10a, 10b) et en particulier de chaque autre couche (10) située au-dessus sont similaires à une forme trapézoïdale ou à un secteur de cercle.

11. Remplissage de catalyseur selon la revendication 10,
**caractérisé en ce que**
les plaques (14a, 14b) des première et deuxième couches (10a, 10b) et en particulier de chaque autre couche (10) située au-dessus sont disposées chacune en formant un anneau circulaire de plaques.

12. Remplissage de catalyseur selon la revendication 11,
**caractérisé en ce que**
les diamètres intérieurs des anneaux circulaires de plaques des couches successives (10) sont différents, et/ou
un cercle intérieur de chaque anneau circulaire de plaques est rempli par au moins une plaque centrale (36).

13. Remplissage de catalyseur selon la revendication 11,
**caractérisé en ce que**
les diamètres intérieurs des anneaux circulaires de plaques de toutes les couches (10) sont au moins approximativement identiques, et/ou une zone centrale définie par les anneaux circulaires de plaques est fermée par une pièce de fermeture, en particulier par une pièce de fermeture maintenant les plaques (14) ensemble.

14. Remplissage de catalyseur selon l'une au moins des revendications précédentes,
**caractérisé par**
au moins un capteur de position et/ou un élément de maintien de position (28) qui définit la position d'une couche (10) de matériau catalyseur par rapport à une couche (10) de matériau catalyseur située en dessous.

15. Remplissage de catalyseur selon l'une au moins des revendications précédentes,
**caractérisé en ce que**
plusieurs plaques (14) superposées sont reliées en une pièce de forme (20) sous la forme d'un empilement de plaques décalé en oblique dans au moins une direction.
